Europäisches Patentamt

European Patent Office

Office européen des brevets

(19)

(11) Publication number: **0 371 609**

**A2**

(12) **EUROPEAN PATENT APPLICATION**

(21) Application number: **89310915.7**

(22) Date of filing: **23.10.89**

(51) Int. Cl.5: **H04L 12/54**

(30) Priority: **29.11.88 US 277586**

(43) Date of publication of application:
**06.06.90 Bulletin 90/23**

(84) Designated Contracting States:
**DE FR GB IT**

(71) Applicant: **International Business Machines Corporation**
**Old Orchard Road**
**Armonk, N.Y. 10504(US)**

(72) Inventor: **Wolf, Timothy James**
**2621 Cummings Drive**
**Bedford Texas 76021(US)**
Inventor: **Heyen, John Gary**
**1747 Conrad Circle**
**Carrollton Texas 75007(US)**
Inventor: **Kasiraj, Chander**
**2133 North Aspenwood**
**Grapevine Texas 76051(US)**

(74) Representative: **Grant, Iain Murray**
**IBM United Kingdom Limited Intellectual Property Department Hursley Park**
**Winchester Hampshire SO21 2JN(GB)**

(54) **Electronic mail systems.**

(57) A method is disclosed for providing confirmation to a sender of electronic mail of selected activities by a recipient thereof. The sender may designate an electronic mail object or selected components of an electronic mail object; selected recipients within a plurality of recipients; or, selected activities, for which confirmation is desired. The activities of each recipient, such as: print; view; forward; reply; send; copy; or, move, are then monitored. After each activity, a determination is made whether or not a confirmation message is required for that mail object, recipient, or activity. If so, a confirmation message is automatically transmitted to the sender.

Fig. 2

## ELECTRONIC MAIL SYSTEMS

This invention relates in general to improvements in electronic mail systems and in particular to methods whereby a sender of electronic mail may receive confirmation of selected activities by recipients of electronic mail. Based on such arrangements, it is sought to provide methods whereby a sender of electronic mail may receive confirmation of activities by a selected recipient of a plurality of recipients.

Electronic mail or "E-Mail" systems are well known in the prior art. By "electronic mail" what is meant is a system whereby messages may be sent and/or received between two computers or work stations. For example, two computers coupled together by a Local Area Network (LAN) may be used to communicate detailed messages between the operators thereof. Similarly, two interactive work stations coupled to a central processor may also be used to transmit or receive electronic mail messages by using well known communication techniques.

While known electronic mail systems do provide an enhanced method of communication which may be used in situations where all parties in the communications loop are not on-line at all times, there are certain disadvantages inherent in such systems. For example, it is often desirable for the sender of an item of electronic mail to determine with a high degree of certainty whether or not the item has been electronically transmitted to the correct location.

This particular problem has been addressed in selected electronic mail systems which provide a confirmation notification when a distribution is "delivered" or placed in a recipient's "in-basket." While this technique represents an improvement over previously known electronic mail systems, it is often desirable to provide the sender with a higher level of information regarding the activities of an electronic mail recipient. Therefore, it should be obvious that a need exists for an electronic mail system which will satisfy this requirement.

It is therefore one object of the present invention to provide an improved electronic mail system.

The present invention provides a method of providing confirmation to a sender of electronic mail of selected activities by a recipient thereof, the method comprising the steps of:
designating a selected electronic mail object for which confirmation of selected activities by a recipient thereof is desired;
monitoring the activities of the recipient of the electronic mail; and
transmitting a confirmation message to the sender in response to the performance of the selected activities by the recipient.

Such an arrangement results in an improved electronic mail system wherein a sender may receive confirmation of selected activities by recipients of electronic mail or by a selected recipient thereof. One such arrangement as disclosed hereinafter, permits a sender to designate an electronic mail object or selected components of an electronic mail object; selected recipients within a plurality of recipients; or, selected activities, for which confirmation is desired. The activities of each recipient, such as: print; view; forward; reply; send; copy; or, move, are then monitored. After each activity a determination is made whether or not a confirmation is required for that mail object, recipient or activity. If so, a confirmation is automatically transmitted to the sender.

The present invention will be described further by way of example with reference to an embodiment thereof as illustrated in the accompanying drawings, wherein:

Figure 1 is a block diagram of one form of electronic network;

Figure 2 is a logic flow chart of the operation performed therein at the electronic mail sender location; and

Figure 3 is a logic flow chart of the operations performed therein at the electronic mail recipient location.

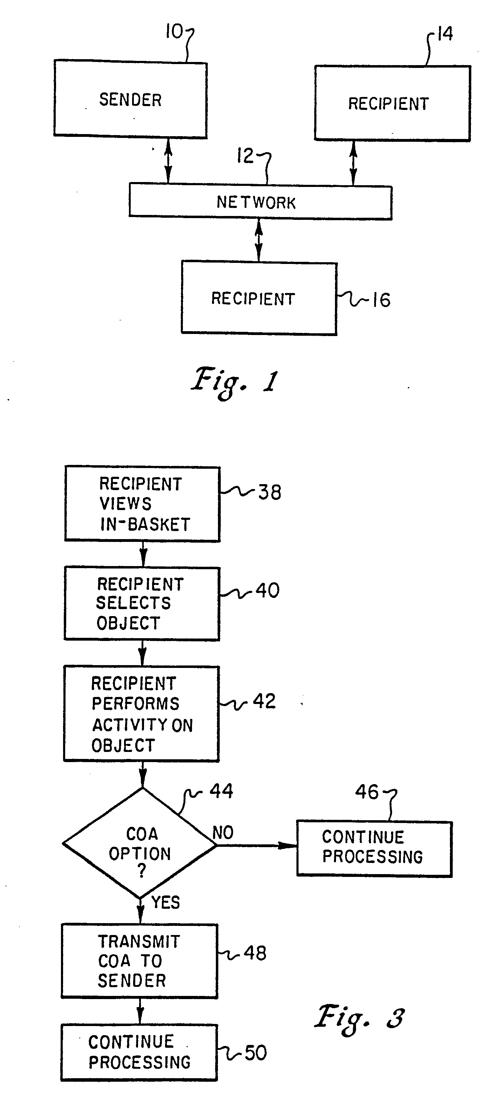

With reference now to Figure 1, an electronic network is shown, in which a sender 10 is coupled to a network 12, together with a pair of recipients 14 and 16. Those skilled in the art will appreciate that sender 10, recipient 14 and recipient 16 may be implemented using individual personal computers and that network 12 may constitute a Local Area Network (LAN). Similarly, sender 10, recipient 14 and recipient 16 may each constitute an interactive work station which may be coupled via network 12 to a central processing unit. In either event, it is often desirable for sender 10 to transmit electronic messages or mail to either or both recipient 14 and recipient 16 for storage until such time as the operator of the unit at recipient 14 or recipient 16 may return to receive the message contained therein.

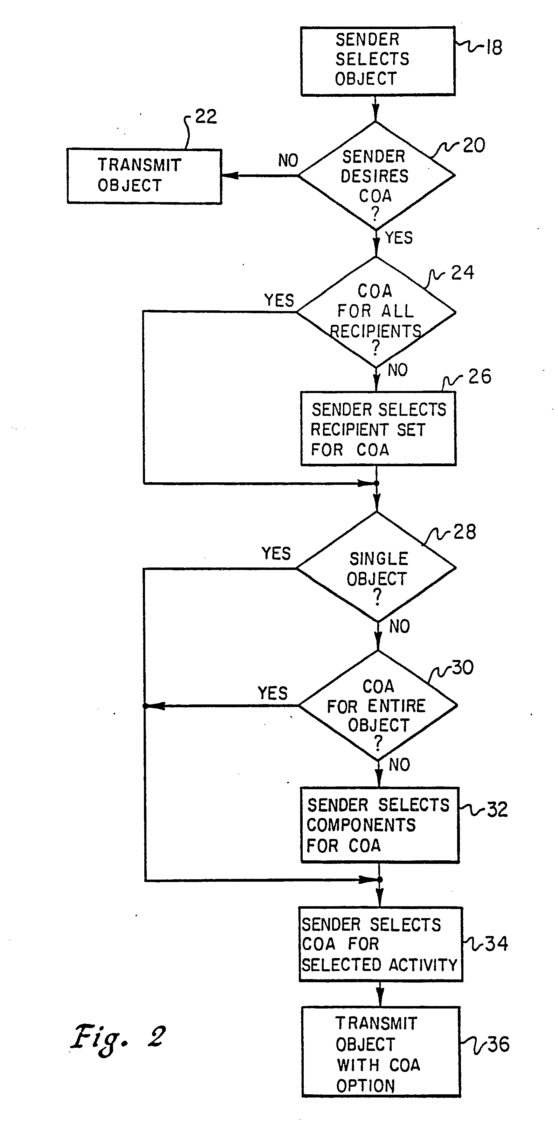

Referring now to Figure 2, there is depicted a logic flow chart of the method of the operations implemented at the electronic mail sender location 10. As may be seen, the process begins at block 18 where the sender selects an object to be transmitted over the electronic mail network. Those skilled in the art will appreciate that such objects may constitute single or multiple component objects, such as a folder. Next, as illustrated in block 20, a determination is made whether or not the sender desires a confirmation of activity (COA) to be associated with the selected object. If not, the object is transmitted normally via the electronic mail system, as illustrated in block 22.

Next, as depicted in block 24, a determination is made as to whether or not the sender desires a confirmation of activity (COA) for all recipients of the electronic mail object. If the sender does desire a confirmation of activity (COA) for all recipients, the process proceeds to block 28. In the event the sender does not desire a confirmation of activity (COA) for all recipients, then block 26 illustrates the selection, by the sender, of a selected recipient set for which a confirmation of activities (COA) is desired.

Block 28 illustrates a determination of whether or not the electronic mail object to be transmitted is a single or multi-component object. In the event the object is a single component object, the process proceeds to block 34. If the electronic mail object is not a single component object, then block 30 depicts a determination of whether or not the sender desires a confirmation of activity (COA) for the entire object. If so, the process again proceeds to block 34.

In the event the sender does not desire a confirmation of activity (COA) for each component within the electronic mail object, then block 32 depicts the selection by the sender of individual components within the electronic mail object for which he desires a confirmation of activity (COA). Thereafter, block 34 depicts the selection by the sender of a confirmation of activity (COA) for a selected activity. In this step, the sender may elect to have the process return a confirmation of activity for any action which is taken by a recipient or, for selected activities within the group of possible activities.

For example, a recipient may decide to take one of several activities such as: print; view; forward; reply; send; copy; or, move.

Those skilled in the art will appreciate that there are many applications for such a method. For example, a sender may transmit an electronic mail object to a particular recipient along with instructions not to copy the message. The sender may also request a confirmation of activity which will provide a message to the sender in the event the recipient prints the message, in direct contradiction to the sender's instructions. Finally, the electronic mail object thus processed is transmitted with the confirmation of activity (COA) option associated therewith, as illustrated by block 36.

With reference now to Figure 3, there is depicted a logic flow chart of the operations implemented at the electronic mail recipient's location. As may be seen, the process begins at block 38 wherein the recipient views his "in-basket" to determine if any electronic mail objects contained therein. Block 40 illustrates a selection by the recipient of a particular object within his "in-basket."

Next, as depicted in block 42, the recipient performs some activity upon the electronic mail object. As discussed above, there are many activities which a recipient may elect to perform such as: print; view; forward; reply; send; copy; or, move. After each activity has been performed by the recipient, block 44 is used to illustrate the determination of whether or not the electronic mail object selected by the recipient has a confirmation of activity (COA) option associated therewith. If not, block 46 depicts the continued processing of the electronic mail, in accordance with the desires of the recipient.

In the event the electronic mail object selected by the recipient has a confirmation of activity (COA) option associated therewith, block 48 depicts the transmitting of a confirmation of activity (COA) message to the sender notifying the sender that a selected activity has occurred and/or that a selected recipient has performed that activity. Finally, block 50 illustrates the continued processing of electronic mail objects in accordance with the desires of the recipient.

Thus there has been disclosed an arrangement whereby a sender of electronic mail may associate with each electronic mail object a confirmation of activity (COA) option which will provide for a confirmation message which will be transmitted to the sender automatically in response to a preselected activity by a preselected recipient of that electronic mail. In such manner, the sender may simply and easily restrict the further transmittal of his electronic mail without his knowledge, or receive a confirmation which notifies him of the activities of the recipient in far greater detail than any other method known in the prior art. Allied material is disclosed and claimed in co-pending applications ........... (AT9-88-032 and AT9-88-038).

## Claims

1. A method of providing confirmation to a sender of electronic mail of selected activities by a recipient thereof, the method comprising the steps of:

designating a selected electronic mail object for which confirmation of selected activities by a recipient thereof is desired;

monitoring the activities of the recipient of the electronic mail; and

transmitting a confirmation message to the sender in response to the performance of the selected activities by the recipient.

2. A method as claimed in Claim 1, wherein the step of designating a selected electronic mail object for which confirmation of selected activities by a recipient thereof is desired comprises the step of designating a particular component of the selected electronic mail object for which confirmation of selected activities by a recipient thereof is desired.

3. A method as claimed in any preceding Claim, wherein the step of designating a selected electronic mail object for which confirmation of selected activities by a recipient thereof is desired comprises the step of designating a particular one of the selected activities for which confirmation is desired.

4. A method as claimed in either preceding Claim, wherein the electronic mail is sent to a plurality of recipients and wherein the step of designating a selected electronic mail object for which confirmation of selected activities by a recipient thereof is desired comprises the step of designating a particular recipient for which confirmation of selected activities is desired.

5. A method as claimed in Claim, wherein the step of designating a selected electronic mail object for which confirmation of selected activities by a recipient thereof further comprises the step of designating a particular one of the selected activities for which confirmation is desired.

6. A method as claimed in any preceding Claim, wherein the step of transmitting a confirmation message to the sender in response to the performance of the selected activities by the recipient comprises the step of transmitting a confirmation message comprising a description of a particular activity by the recipient.

EP 0 371 609 A2

Fig. 1

Fig. 3

Fig. 2